# EUROPÄISCHE PATENTSCHRIFT

(11) **EP 3 895 816 B1**
(45) Veröffentlichungstag und Bekanntmachung des Hinweises auf die Patenterteilung: **27.08.2025**
(21) Anmeldenummer: 21150453.5
(22) Anmeldetag: 07.01.2021
(51) Int. Cl.: B08B 9/44

(54) **FLASCHENWASCHMASCHINE UND VERFAHREN ZUM ZUFÜHREN VON FLASCHEN IN DIE FLASCHENWASCHMASCHINE**
BOTTLE WASHING MACHINE AND METHOD FOR FEEDING BOTTLES INTO THE BOTTLE WASHING MACHINE
LAVE-BOUTEILLES ET PROCÉDÉ D'ACHEMINEMENT DES BOUTEILLES AU LAVE-BOUTEILLES

(30) Priorität: 15.04.2020 DE 102020110229
(43) Veröffentlichungstag der Anmeldung: 20.10.2021
(73) Patentinhaber: Krones AG, 93073 Neutraubling (DE)
(72) Erfinder: Michael, Siegmund, 93073 Neutraubling (DE)
(74) Vertreter: Grünecker Patent- und Rechtsanwälte PartG mbB

(56) Entgegenhaltungen:
- EP-A1- 3 184 181
- EP-A2- 2 599 721
- WO-A1-2010/046002
- DE-A1- 102018 205 005
- FR-A4- 2 449 642
- JP-A- H03 245 885
- US-B1- 6 371 717

## Beschreibung

Die Erfindung betrifft ein Verfahren zum Zuführen von Flaschen in eine mehrspurige Flaschenwaschmaschine gemäß dem Oberbegriff des Anspruchs 1 und eine Flaschenwaschmaschine gemäß dem Oberbegriff des Anspruchs 8.

Ein gattungsgemäßes Verfahren und eine gattungsgemäße Flaschenwaschmaschine sind aus der EP 3 184 181 A1 bekannt. Demnach werden zu reinigende Flaschen in Flaschenkästen bereitgestellt und von einem Roboterarm gruppenweise aus den Flaschenkästen aufgenommen und in einem im Aufgabebereich der Flaschenwaschmaschine angeordneten Rahmen mit Gefachen aufrechtstehend abgesetzt. Die Querabstände zwischen den Flaschen werden am Roboterarm an die Querabstände im Rahmen und die entsprechenden Spurabstände in der Flaschenwaschmaschine angepasst. Der Träger wird mit den eingesetzten Flaschen um 90° zur Flaschenwaschmaschine hin gekippt, um die Flaschen gemeinsam in eine liegende Anordnung mit nach vorn weisenden Mündungen zu überführen. Schließlich werden die Flaschen von Stempeln aus dem Rahmen in horizontaler Richtung in Flaschenkörbe geschoben, die im Bereich der Flaschenaufgabe entlang einer vertikalen Transportbahn laufen.

Für den Rahmen wird jedoch zusätzliche Stellfläche und ein Antrieb zum Kippen zwischen einer horizontalen und einer vertikalen Stellung benötigt. Zusätzlich wird eine Einschubvorrichtung benötigt, die die Flaschen mittels Stempeln aus dem Rahmen in die Flaschenkörbe drückt. Diese Einschubvorrichtung muss entweder bei jedem Kippen des Rahmens aus dem / in den Aufgabebereich der Flaschen bewegt werden, oder sie muss auf der Unterseite des Rahmens montiert und ebenso gekippt werden. Dies verursacht einen unerwünscht hohen technischen Aufwand und Platzbedarf.

Es besteht daher der Bedarf für demgegenüber vereinfachte Verfahren zum Zuführen von Flaschen in eine mehrspurige Flaschenwaschmaschine und für entsprechend verbesserte Flaschenwaschmaschinen.

Die gestellte Aufgabe wird mit einem Verfahren gemäß Anspruch 1 und mit einer Flaschenwaschmaschine gemäß Anspruch 8 gelöst.

Demnach dient das Verfahren zum Zuführen von Flaschen in eine mehrspurige Flaschenwaschmaschine, wobei die Flaschen in Gefachen von Transportbehältern vereinzelt und insbesondere taktweise bereitgestellt werden. Alternativ oder ergänzend werden die Flaschen auf einem Zuführtransporteur vereinzelt, beispielsweise auf einer vom Zuführtransporteur zugeführten Neuglaspalette stehend, in vom Zuführtransporteur zugeführten Gefachen, oder auf einer anderen vom Zuführtransporteur zugeführten gemeinsamen Unterlage stehend, bereitgestellt. Die Flaschen werden jeweils robotergeführt, also mittels wenigstens eines Roboters, und je nach obiger Zuführung mündungsseitig aus den Gefachen herausgezogen und umgesetzt und/oder mündungsseitig vom Zuführtransporteur aufgenommen und umgesetzt.

Erfindungsgemäß werden die Flaschen ferner robotergeführt, also von wenigstens einem Roboter, in umlaufende Flaschenkörbe zum Transport der Flaschen durch die Flaschenwaschmaschine direkt eingesetzt.

Dadurch werden zusätzliche Übergabemechanismen zur Lageanpassung der Flaschen im Aufgabebereich entbehrlich. Dies spart Stellfläche ein und reduziert den apparativen Aufwand im Aufgabebereich. Insbesondere werden zum Einsetzen der Flaschen in die Flaschenkörbe keine weiteren lageverändernden Transportmittel, wie Hubeinheiten, Schwenkrahmen oder dergleichen aktive Komponenten benötigt.

Das heißt, die Relativbewegung der Flaschen und der Flaschenkörbe beim Einsetzen wird ausschließlich robotergeführt und durch den Transport der Flaschenkörbe erzeugt. Es könnten jedoch zusätzlich passive Führungselemente vorhanden sein, die die Flaschen beim Einsetzen in die Flaschenkörbe beispielsweise seitlich führen. Derartige passive Führungselemente erfordern nur geringen apparativen Aufwand und Platzbedarf im Bereich der Flaschenaufgabe.

Unter umlaufenden Flaschenkörben ist zu verstehen, dass diese an einem endlos im Bereich der Flaschenwaschmaschine umlaufenden Transportmittel, beispielsweise Transportketten, durch den Aufgabebereich der Flaschenwaschmaschine laufen. Die Flaschenkörbe bewegen sich hierbei im Aufgabebereich kontinuierlich entlang einer durch das umlaufende Transportmittel vorgegebenen Transportstrecke und dann weiter durch die in der Flaschenwaschmaschine vorhandenen Reinigungsstufen.

Unter einer vereinzelten Bereitstellung der Flaschen ist zu verstehen, dass die Flaschen unter Einhaltung einer Transportordnung / Zulaufordnung zueinander und insbesondere in Abständen zueinander zugeführt werden, also im Gegensatz zu einem ungeordneten Massentransport, bei dem die Flaschen durch gegenseitiges Drängeln ihre Relativpositionen zueinander während des Transports ändern. Die Transportordnung / Zulaufordnung kann beispielsweise durch Transportgefache vorgegeben sein oder durch eine regelmäßige Flaschenanordnung auf einer Neuglaspalette oder dergleichen Unterlage für mehrere Flaschen.

Vorzugsweise laufen die Flaschenkörbe beim Einsetzen der Flaschen in horizontaler Transportrichtung oder entlang einer Steigung von höchstens 45°, insbesondere mit jeweils orthogonal dazu ausgerichteter Einführöffnung. Das heißt, die Einführöffnung ist dann entweder vertikal oder mit einer diesbezüglichen Neigung von höchstens 45° ausgerichtet.

Es ist aber auch denkbar, dass die Flaschenkörbe beim Einsetzen der Flaschen entlang eines Gefälles von höchstens 45° laufen, insbesondere mit jeweils orthogonal dazu ausgerichteter Einführöffnung. Das heißt, die Einführöffnung ist dann entweder vertikal oder mit einer diesbezüglichen Neigung von höchstens 45° ausgerichtet. Ein derartiges Gefälle im Aufgabebereich eignet sich besonders für sogenannte Ein-Endmaschinen.

Dies erleichtert das Einsetzen der Flaschen in die Flaschenkörbe, da die Flaschen dann im Wesentlichen hängend bezüglich der Flaschenkörbe ausgerichtet werden können und zudem untere Zuhilfenahme der Schwerkraft in die Flaschenkörbe eingesetzt werden können. Es wäre beispielsweise möglich, die Flaschen nur unvollständig in die Flaschenkörbe einzuführen und loszulassen, sodass die Flaschenmündungen dort mittels Schwerkraft in Halterungen einrasten oder dergleichen.

Vorzugsweise werden die Flaschen kopfüber in die Flaschenkörbe eingesetzt. Dies ermöglicht eine vergleichsweise einfache Ausrichtung und/oder Befestigung der Flaschen in den Flaschenkörben, insbesondere unter Zuhilfenahme der Schwerkraft.

Vorzugsweise werden die Flaschen von wenigstens einem ersten Roboterarm mündungsseitig gegriffen sowie aus den Gefachen / Transportgefachen entnommen oder vom Zuführtransporteur aufgenommen und dann jeweils von wenigstens einem dem ersten Roboterarm insbesondere seriell zugeordneten zweiten Roboterarm bodenseitig / bodennah, also im Wesentlichen am entgegengesetzten Ende der Flaschen, übernommen und in die Flaschenzellen eingesetzt. Dies ermöglicht ein Ausrichten, Einführen und Befestigen der Flaschen in herkömmlichen Flaschenkörben auf besonders effiziente Weise.

Durch die Übergabe der Flaschen unter Einbeziehen des ersten und zweiten Roboterarms ist zudem ein vergleichsweise schnelles Umsetzen der Flaschen von den Transportgefachen oder dem Zuführtransporteur in die Flaschenkörbe möglich. Der erste und zweite Roboterarm können sich die Umsetzstrecke zwischen den Gefachen und den Flaschenkörben auf geeignete Weise teilen, beispielsweise sich im Wesentlichen auf halber Umsetzstrecke treffen, sodass der erste Roboterarm bereits während des Einsetzens der Flaschen in die Flaschenkörbe wieder zu den Gefachen oder dem Zuführtransporteur zurückbewegt werden kann, um erneut wenigstens eine Flasche aufzunehmen.

Vorzugsweise werden die Flaschen direkt, also fliegend, vom ersten Roboterarm an den zweiten Roboterarm übergeben. Dies ermöglicht ein besonders schnelles Umsetzen der Flaschen von den Gefachen / dem Zuführtransporteur in die Flaschenkörbe. Denkbar wäre aber auch eine Zwischenablage auf einem Regal oder dergleichen für die Flaschenübergabe, insbesondere indem die Flaschen vorübergehend liegend abgelegt werden derart, dass die abgelegten Flaschen sowohl mündungsseitig als auch bodenseitig / bodennah gegriffen werden können. Auch könnten die Flaschen bei der Übergabe lediglich von unten abgestützt werden.

Die Begriffe "bodennah" und "bodenseitig" beziehen sich hierbei stets auf den Flaschenboden im Sinne einer von der Flaschenmündung abgewandten / entgegengesetzten Handhabung der Flaschen.

Prinzipiell wäre ein Wechsel von mündungsseitiger / halsgeführter Handhabung (beim Aufnehmen der Flaschen) auf bodenseitige / bodennahe Handhabung (zum Einsetzen der Flaschen) auch an ein und demselben Roboterarm denkbar. Dieser könnte beispielsweise einen ersten Greifer zum mündungsseitigen / halsgeführten Aufnehmen der Flaschen und einen zweiten Greifer zum bodenseitigen / bodennahen Einsetzen der Flaschen umfassen.

Der erste und/oder zweite Greifer kann dann kippbar / drehbar ausgebildet sein, um die Flaschen am Roboterarm vom ersten an den zweiten Greifer zu übergeben.

Bei einer günstigen Ausführungsform des Verfahrens werden die Flaschen einzeln in die Flaschenkörbe eingesetzt. Dies ermöglicht ein besonders flexibles Umsetzen der Flaschen, beispielsweise unter Anpassung der Querabstände der Flaschen in den Gefachen / auf dem Zuführtransporteur an die Querabstände der Flaschen in den Flaschenkörben. Zudem können einzelne Flaschenkörbe, beispielsweise solche, die zuvor als defekt erkannt worden sind, von der Flaschenaufgabe gezielt ausgenommen werden.

Vorzugsweise führen die Roboterarme die Flaschen nur unvollständig in die Flaschenkörbe ein und lassen diese dann zum vollständigen Einsetzen in den Flaschenkörben fallen und/oder rutschen, bis sie stirnseitig in den Flaschenkörben anschlagen oder einrasten. Dies ermöglicht eine besonders zügige Umsetzung der Flaschen im Bereich der Flaschenkörbe.

Je nach Führung und Befestigung der Flaschen in den Flaschenkörben kann es aber auch zweckdienlich sein, dass die Flaschen vom jeweiligen Roboterarm in eine stirnseitig in den Flaschenkörben angeordnete Befestigungsklammer oder dergleichen gedrückt werden. Das Einsetzen der Flaschen lässt sich insbesondere mit einer Robotersteuerung vergleichsweise flexibel und gezielt an die jeweiligen Flaschen und Flaschenkörbe anpassen.

Die Flaschenwaschmaschine umfasst demnach einen Aufnahmebereich zum Bereitstellen von in Transportgefachen und/oder auf einem Zuführtransporteur vereinzelten Flaschen, einen Aufgabebereich zum Einsetzen der Flaschen in die Flaschenwaschmaschine durchlaufende Flaschenkörbe, und wenigstens einen im/am Aufgabebereich angeordneten Umsetzroboter mit einem Roboterarm zum mündungsseitigen Aufnehmen der derart bereitgestellten Flaschen.

Erfindungsgemäß ist der / sind die Umsetzroboter zum direkten Einsetzen in die Flaschenkörbe ausgebildet, insbesondere mittels eines weiteren, die Flaschen bodenseitig / bodennah übernehmenden Roboterarms. Damit lassen sich die bezüglich des Anspruchs 1 beschriebenen Vorteile erzielen.

Vorzugsweise umfasst die Flaschenwaschmaschine ferner eine im Aufgabebereich horizontal und/oder mit einer Steigung von höchstens 45° verlaufende Transportstrecke für die Flaschenkörbe. Alternativ kann die Flaschenwaschmaschine eine im Aufgabebereich horizontal und/oder mit einem Gefälle von höchstens 45° verlaufende Transportstrecke für die Flaschenkörbe umfassen. Damit lassen sich die bezüglich des Anspruchs 2 beschriebenen Vorteile erzielen.

Ergänzend oder alternativ sind die Transportstrecke und die Flaschenkörbe so ausgebildet, dass die Einführöffnungen der Flaschenkörbe im Aufgabebereich vertikal nach oben oder mit einer diesbezüglichen Neigung von höchstens 45° ausgerichtet sind. Damit lassen sich die bezüglich des Anspruchs 2 beschriebenen Vorteile erzielen.

Vorzugsweise ist der / sind die Umsetzroboter derart gesteuert, dass die Flaschen beim Einsetzen in die Flaschenkörbe kopfüber ausgerichtet sind. Damit lassen sich die bezüglich des Anspruchs 3 beschriebenen Vorteile erzielen.

Vorzugsweise ist der / sind die Umsetzroboter derart angeordnet und gesteuert, dass die Flaschen vom zugeordneten Roboterarm nur unvollständig in die umlaufenden Flaschenkörbe eingeführt und dann in den Flaschenkörben fallengelassen werden. Damit lassen sich die bezüglich des Anspruchs 7 beschriebenen Vorteile erzielen.

Alternativ könnte man den / die Umsetzroboter aber auch derart steuern, dass die Flaschen beim Einsetzen mündungsseitig in die Flaschenkörbe gedrückt werden, beispielsweise in daran vorhandene Halteklammern oder dergleichen.

Vorzugsweise umfasst der / umfassen die Umsetzroboter wenigstens einen ersten Roboterarm zum mündungsseitigen / halsseitigen Greifen und Entnehmen der Flaschen aus den Transportgefachen oder Aufnehmen von einem Zuführtransporteur sowie einen jeweils zugeordneten zweiten Roboterarm zum bodenseitigen / bodennahen Greifen und Einsetzen der Flaschen in die Flaschenzellen. Damit lassen sich die bezüglich des Anspruchs 4 beschriebenen Vorteile erzielen.

Vorzugsweise ist der / sind die Umsetzroboter zur direkten Übergabe der Flaschen vom ersten Roboterarm an den zweiten Roboterarm ausgebildet. Damit lassen sich die bezüglich des Anspruchs 5 beschriebenen Vorteile erzielen.

Vorzugsweise umfasst der Umsetzroboter wenigstens einen Roboterarm mit einem ersten Greifer zum mündungsseitigen Greifen und Entnehmen der Flaschen aus den Transportgefachen oder Aufnehmen vom Zuführtransporteur sowie einen zweiten Greifer zum bodenseitigen Übernehmen und Einsetzen der Flaschen in die Flaschenzellen. Der erste und/oder zweite Greifer kann dann kippbar / drehbar ausgebildet sein, um die Flaschen am Roboterarm vom ersten an den zweiten Greifer zu übergeben. Somit ist eine Übergabe von mündungsseitiger / halsseitiger Handhabung der Flaschen auf bodenseitige / bodennahe Handhabung an ein und demselben Roboterarm auch an verschiedenen Punkten der Umsetzstrecke / Bewegungsbahn besonders flexibel möglich.

Vorzugsweise umfasst jeder Roboterarm wenigstens einen Greifer pro umzusetzender Flasche, um die Flaschen gruppenweise oder einzeln aus den Gefachen zu entnehmen bzw. vom Zuführtransporteur aufzunehmen und/oder gruppenweise oder einzeln in die Flaschenkörbe einzusetzen.

Beispielsweise wäre es dann denkbar, die zwischen den Gefachen und den Flaschenkörben zu überbrückende Umsetzstrecke so zwischen den Roboterarmen aufzuteilen, dass der zweite Roboterarm hauptsächlich eine bodennahe Querverteilung der Flaschen auf einzelne Transportspuren und das anschließende Einsetzen in die dortigen Flaschenkörbe vornimmt.

Dagegen könnte der erste Roboterarm hauptsächlich einen halsgeführten Längstransport der Flaschen bis zur Übergabe an den zweiten Roboterarm ausführen. Somit lässt sich die Flaschenaufgabe flexibel an die Anordnung der Flaschen in den Gefachen und die Spuranzahl der Flaschenkörbe in der Flaschenwaschmaschine anpassen.

Für die einzelnen Ausgestaltungen der Flaschenwaschmaschine umfasst der / umfassen die Umsetzroboter eine auf geeignete Weise programmierbare Steuerung.

Bevorzugte Ausführungsformen der Erfindung sind zeichnerisch dargestellt. Es zeigen:
- Fig. 1: eine schematische seitliche Ansicht einer ersten Ausführungsform;
- Fig. 2: eine schematische Draufsicht auf eine zweite Ausführungsform; und
- Fig. 3: Varianten des Wechsels von halsgeführter auf bodennahe Flaschenhandhabung.

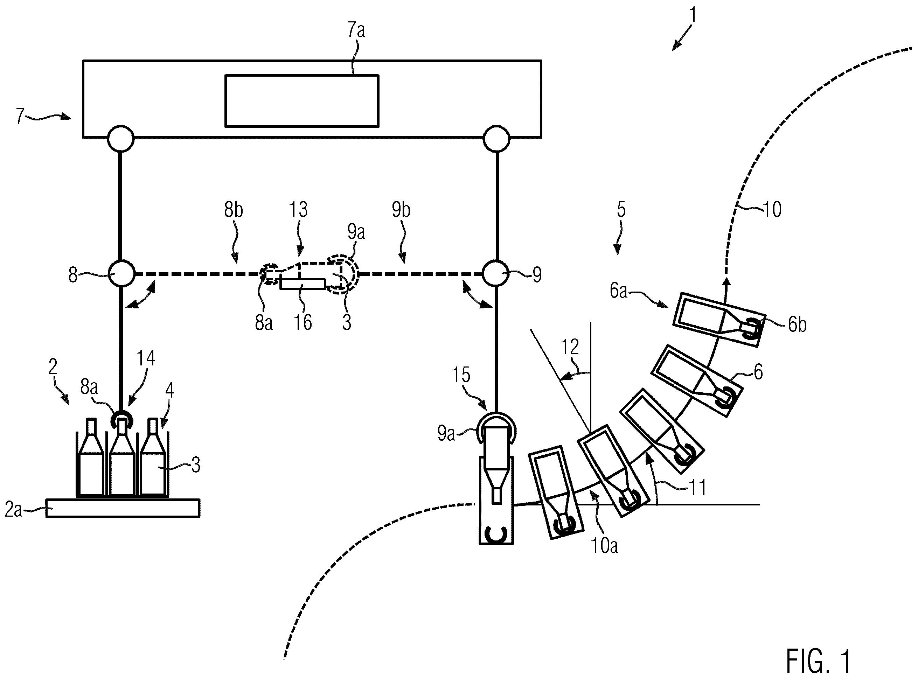

Wie die Fig. 1 erkennen lässt umfasst die Flaschenwaschmaschine 1 gemäß einer ersten Ausführungsform einen Aufnahmebereich 2 zum insbesondere taktweisen Bereitstellen vereinzelter Flaschen 3 in Transportgefachen 4 (nachfolgend der Einfachheit halber Gefache 4 genannt), die beispielsweise Bestandteile herkömmlicher Flaschenkästen sind, und/oder auf einem Zuführtransporteur 2a. Die Flaschen 3 könnten beispielsweise auf einer vom Zuführtransporteur 2a zugeführten Neuglaspalette oder dergleichen Unterlage (nicht dargestellt) in einer regelmäßigen Anordnung im Sinne einer Vereinzelung stehen. Die Gefache 4 stellen ebenso eine regelmäßige Anordnung der Flaschen 3 im Aufnahmebereich 2 / auf dem Zuführtransporteur 2a her.

Ferner umfasst die Flaschenwaschmaschine 1 einen Aufgabebereich 5, in dem die Flaschen 3 in Flaschenkörbe 6 oder dergleichen Flaschenzellen eingesetzt werden. Die Flaschenkörbe 6 sind auf prinzipiell bekannte Weise in gleichmäßigen Querabständen in einer Vielzahl von Transportspuren angeordnet und durchlaufen die Flaschenwaschmaschine 1 kontinuierlich.

Die Flaschenwaschmaschine 1 umfasst wenigstens einen Umsetzroboter 7 mit einem ersten Roboterarm 8 zum mündungsseitigen / halsgeführten Aufnehmen der in den Gefachen 4 / auf dem Zuführtransporteur 2a bereitgestellten Flaschen 3. Der erste Roboterarm 8 umfasst zu diesem Zweck einen zum mündungsseitigen / mündungsnahen Greifen und Loslassen der Flaschen 3 aktiv gesteuerten Greifer 8a.

Der/die Umsetzroboter 7 umfasst/umfassen vorzugsweise zudem einen zweiten Roboterarm 9 zum bodenseitig / bodennah geführten Einsetzen der Flaschen 3 direkt in die Flaschenkörbe 6. Der zweite Roboterarm 9 umfasst zu diesem Zweck einen zum bodenseitigen / bodennahen Greifen und Loslassen der Flaschen 3 aktiv gesteuerten Greifer 9a.

Der / die Umsetzroboter 7 umfasst / umfassen eine programmierbare Steuerung 7a. Mit dieser werden die Bewegungsabläufe der jeweils vorhandenen Roboterarme 8, 9 samt Greifer 8a, 9a auf geeignete Weise miteinander koordiniert. Dies gilt prinzipiell für alle beschriebenen Ausführungsformen.

Die Flaschenwaschmaschine 1 umfasst eine Transportstrecke 10 für die Flaschenkörbe 6. Der Verlauf der Transportstrecke 10, die in der Fig. 1 lediglich schematisch und beispielhaft angedeutet ist, ist im Aufgabebereich 5 an eine robotergestützte Flaschenaufgabe von oben angepasst.

Ansonsten kann die Transportstrecke 10 auf herkömmliche Weise verlaufen und ausgebildet sein, beispielsweise auf der Grundlage endlos umlaufender Ketten, um die Flaschen 3 durch diverse Reinigungsstufen (nicht dargestellt) der Flaschenwaschmaschine 1 zu fördern.

Die Transportstrecke 10 verläuft im Aufgabebereich 5 demnach vorzugsweise horizontal und/oder mit einer Steigung 10a (in Transportrichtung) mit einem Steigungswinkel 11 von höchstens 45°. Insbesondere bei einer Bauform als Ein-Endmaschine könnte die Transportstrecke 10 im Aufgabebereich 5 stattdessen horizontal und/oder mit einem Gefälle (in Transportrichtung) mit einem Gefällewinkel von höchstens 45° verlaufen (nicht dargestellt).

Die Einführöffnungen 6a der Flaschenkörbe 6 sind im Aufgabebereich 5 vorzugsweise vertikal ausgerichtet oder in einem diesbezüglichen Neigungswinkel 12 von höchstens 45°.

Die Flaschen 3 werden vom zweiten Roboterarm 9 vorzugsweise kopfüber in die Flaschenkörbe 6 eingesetzt. Die vertikale oder diesbezüglich höchstens 45°geneigte Ausrichtung der Flaschen 3 erleichtert das Einsetzen der Flaschen 3 in die Flaschenkörbe 6.

Beispielsweise können die Flaschen vom zweiten Roboterarm 9 nur unvollständig in die Flaschenkörbe 6 eingeführt oder über diesen positioniert werden. Der Greifer 9a lässt die Flaschen 3 dann los, bevor diese stirnseitig im Flaschenkorb 6 anschlagen und/oder einrasten, so dass die Flaschen schließlich mittels Schwerkraft vollständig in die Flaschenkörbe 6 fallen und/oder rutschen und/oder darin einrasten.

Die Flaschen 3 können mündungsseitig beispielsweise in stirnseitig an den Flaschenkörben 6 vorhandenen Halterungen 6b, wie beispielsweise Halteklammern, einrasten.

Alternativ können die Flaschen 3 vom zweiten Roboterarm 9 vollständig in die Flaschenkörbe 6 eingeführt und/oder in eine dort stirnseitig ausgebildete Halterung 6b gedrückt werden.

Die Fig. 1 zeigt mit gestrichelten Linien beispielhaft Übergabestellungen 8b, 9b des ersten und zweiten Roboterarms 8, 9 für eine direkte Übergabe der Flaschen 3 vom ersten Roboterarm 8 an den zweiten Roboterarm 9 an einem Übergabepunkt 13.

Unter einer direkten Übergabe ist zu verstehen, dass die Flaschen 3 während der Übergabe von halsgeführter / mündungsgeführter Handhabung 14 auf bodenseitig / bodennah geführte Handhabung 15 vorübergehend zeitlich überlappend sowohl vom ersten als auch vom zweiten Roboterarm 8, 9 gehalten werden. Somit ist eine fliegende Übergabe der Behälter 3 von der halsgeführten / mündungsgeführten Handhabung 14 am ersten Roboterarm 6 zur bodenseitigen / bodennahen Handhabung 15 am zweiten Roboterarm 9 möglich.

Prinzipiell müssen die Behälter 3 bei der Übergabe zwischen den Roboterarmen 8, 9 daher nicht zusätzlich mechanisch abgestützt oder abgelegt werden. Dies wäre jedoch prinzipiell möglich. Dies ist durch ein schematisch angedeutetes und lediglich optionales Ablageregal 16 oder dergleichen Stützstruktur für die Flaschen 3 angedeutet.

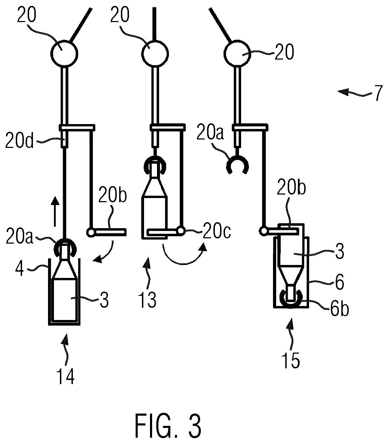

Das Ablageregal 16 könnte beispielsweise so ausgebildet werden, dass die Flaschen 3 darauf zumindest bodenseitig überstehen, um eine halsgeführte Ablage mittels des ersten Roboterarms 8 und eine bodennahe Übernahme mittels des zweiten Roboterarms 9 zu erleichtern. Prinzipiell wäre aber auch ein bodennahes Greifen der Flaschen 3 quer zu deren Längsachse denkbar, wie es beispielhaft in der Fig. 3 angedeutet ist.

Durch Zwischenablage der Flaschen 3 am Übergabepunkt 13 könnten die Bewegungsabläufe des ersten und zweiten Roboterarms 8, 9 zeitlich entkoppelt werden, um beispielsweise den ersten Roboterarm 8 wieder in den Bereich der Gefache 4 / des Zuführtransporteurs 2a zurückzubewegen, bevor der zweite Roboterarm 9 die auf dem Ablageregal 16 abgelegte(n) Flasche(n) 3 übernommen hat.

Das robotergestützte Umsetzen der Flaschen 3 von den Gefachen 4 / dem Zuführtransporteur 2a in die Flaschenkörbe 6 lässt sich durch geeignete Programmierung der Steuerung 7a flexibel an einen Einlauftakt der Flaschen 3 und/oder die jeweilige Anordnung der Gefache 4 oder eine anderweitig vorgegebene Transportordnung der Flaschen 3 auf dem Zuführtransporteur 2a anpassen, also beispielsweise an unterschiedliche Abfolgen und/oder Typen einlaufender Flaschenkästen oder Neuglaspaletten.

Aufgabeseitig ermöglicht die programmierbare Steuerung 7a eine gezielte Flaschenaufgabe in bestimmte Transportspuren der Flaschenwaschmaschine 1 und/oder in einzelne Flaschenkörbe 6, beispielsweise in solche, für die eine korrekte Funktion zuvor sensorisch festgestellt wurde. Entsprechend lassen sich defekte Flaschenkörbe 6 von der Flaschenaufgabe gezielt ausschließen.

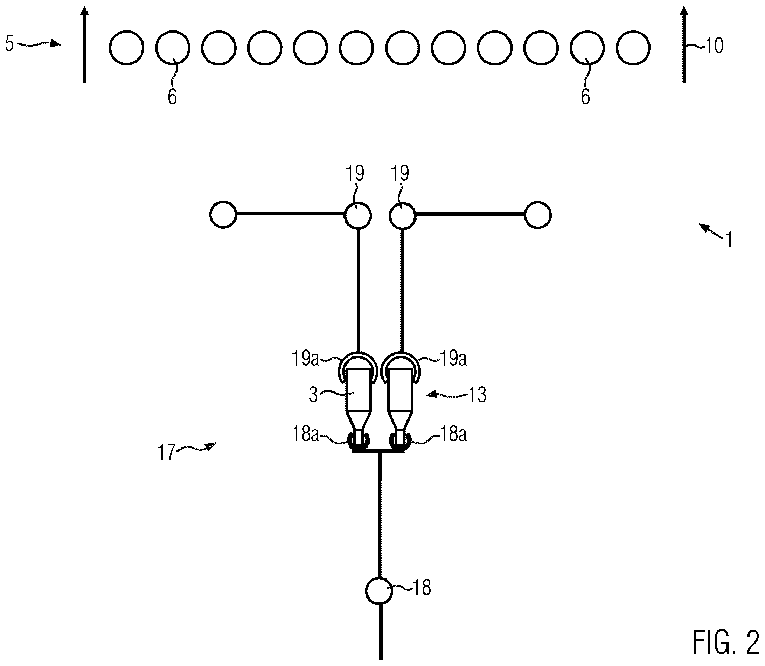

Die Fig. 2 verdeutlicht schematisch in der Draufsicht, dass die Anzahl der an der Flaschenwaschmaschine 1 vorhandenen Umsetzroboter 7 ,17 und/oder einander zugeordneten Roboterarme 8, 9, 18, 19 prinzipiell je nach Anforderung flexibel variiert werden kann.

Demnach kann beispielsweise ein Umsetzroboter 17 vorhanden sein, bei dem sich die Anzahl einander zugeordneter erster und zweiter Roboterarme 18, 19 voneinander unterscheidet. Im Beispiel dargestellt ist der Umsetzroboter 17 mit einem einzigen ersten Roboterarm 18 und mit zwei diesem zugeordneten zweiten Roboterarmen 19. Beispielsweise umfasst dann der erste Roboterarm 18 mehrere Greifer 18a und jeder der zweiten Roboterarme 19 nur halb so viele Greifer 19a. Ebenso wäre eine umgekehrte Konstellation denkbar. Auch kann am ersten oder zweiten Roboterarm 18, 19 nur ein Greifer 18a, 19a vorhanden sein.

Beispielsweise kann der erste Roboterarm 18 am Übergabepunkt 13 so lange warten, bis alle Flaschen 3 von den zweiten Roboterarmen 19 übernommen worden sind. Dies könnte beispielsweise vorteilhaft sein, falls der Anteil der Umsetzstrecke zwischen den Gefachen 4 / dem Zuführtransporteur 2a und dem Übergabepunkt 13 deutlich länger ist als der Anteil zwischen dem Übergabepunkt 13 und den an weitesten davon entfernten Transportspuren der Flaschenkörbe 6.

Besonders flexibel ist eine Einzelübergabe der Flaschen 3 am Übergabepunkt 13 zwischen je einem ersten Roboterarm 8 und einem zugehörigen zweiten Roboterarm 9. In diesem Fall lassen sich die Aufnahmepositionen der einzelnen Flaschen 3 im Aufnahmebereich 2 und die angefahrenen Transportspuren im Aufgabebereich 5 zum dortigen Einsetzen der Flaschen 3 beispielsweise formatabhängig an die jeweils vorliegende Anordnung der Gefache 4 bzw. eine Zulaufordnung der Flaschen 3 und/oder an eine sensorisch festgestellte Funktionstüchtigkeit einzelner Flaschenkörbe 6 anpassen.

Hierbei ermöglicht die Übergabe der Flaschen 3 am Übergabepunkt 13 von der halsgeführten Handhabung 14 auf die bodennahe Handhabung 15 mittels seriell kombinierter erster und zweiter Roboterarme 8, 9, 18, 19 prinzipiell eine Halbierung oder anderweitig geeignete Aufteilung der vom einzelnen Roboterarm 8, 9, 18, 19 zum Umsetzten der Flaschen 3 zwischen den Gefachen 4 / dem Zuführtransporteur 2a und den Flaschenkörben 6 jeweils abzudeckenden Bewegungsbahn.

Dadurch sind vergleichsweise hohe Maschinenleistung möglich, gegebenenfalls auch bei Einzelhandhabung der Flaschen 3 an wenigstens einem der Roboterarme 8, 9, 18, 19.

Nichtsdestoweniger wäre es prinzipiell auch denkbar, an ein und demselben Roboterarm an einem dann flexibel anpassbaren Übergabepunkt 13 von halsgeführter Handhabung 14 auf bodennahe Handhabung 15 der Flaschen 3 zu wechseln. Dies ist in der Fig. 3 exemplarisch für drei charakteristische Stellungen einer alternativen Ausführungsform eines Roboterarms 20 des Umsetzroboters 7 angedeutet.

Demnach kann am Roboterarm 20 wenigstens ein erster Greifer 20a für die halsgeführte Handhabung 14 je einer Flasche 3 und eine entsprechende Anzahl eines zweiten Greifers 20b für die bodennahe Handhabung 15 je einer Flasche 3 vorhanden sein.

Der erste Greifer 20a wird dann zum Aufnehmen der Flasche 3 verwendet (Fig. 3, links), der zweite Greifer 20b zum Einsetzen der Flasche 3 in einen Flaschenkorb 6 (Fig. 3, rechts).

Der zweite Greifer 20b kann nach der bodenseitigen Übernahme der Flasche (Fig. 3, Mitte) am Übergabepunkt 13 beispielsweise um eine Achse 20c gekippt oder anderweitig gedreht werden, um die bodennah gehaltene Flasche 3 zu wenden und vorzugsweise kopfüber in einen Flaschenkorb 6 einzusetzen.

Ergänzend oder alternativ könnte der erste Greifer 20a kippbar / drehbar am Roboterarm 20 angeordnet sein, um von halsgeführter Handhabung 14 der Flaschen 3 auf deren bodennahe Handhabung 15 zu wechseln.

Der erste Greifer 20a könnte mittels einer Hubeinheit 20d am Roboterarm 20 befestigt sein, um das halsgeführte Aufnehmen und die anschließende Übergabe an den zweiten Greifer 20b zu erleichtern.

Die Greifer 8a, 9a, 18a, 19a 20a, 20b sind dann jeweils zum Schließen / Öffnen aktiv gesteuert.

Alle beschriebenen Ausführungsformen des Umsetzroboters 7, 17 ermöglichen eine aufgrund der beibehaltenen Vereinzelung der Flaschen 3 besonders störungsfreie Flaschenaufgabe für einen ansonsten herkömmlichen Arbeitsbetrieb der Flaschenwaschmaschine 1.

Während des Arbeitsbetriebs können die Flaschen 3 im Aufnahmebereich 2 jeweils in einem Gefache 4, beispielsweise in herkömmlichen Flaschenkästen, in Gruppen vereinzelt mittels des beispielsweise als Förderband ausgebildeten Zuführtransporteurs 2a (in der Fig. 1 in die Zeichenebene verlaufend), einer Packmaschine oder dergleichen taktweise bereitgestellt werden. Ebenso könnten die Flaschen 3 in geordneten Gruppen auf Neuglaspaletten stehend vereinzelt vom Zuführtransporteur 2a bereitgestellt werden.

Die Flaschenkörbe 6 können ebenso auf bekannte Weise an einem endlosen Transportmittel entlang der Transportstrecke 10 durch die Flaschenwaschmaschine 1 laufen.

Das beschriebene Verfahren und die beschriebene Flaschenwaschmaschine 1 ermöglichen eine Flaschenaufgabe unter durchgehender Aufrechterhaltung der Vereinzelung der Flaschen 3. Das heißt, die Vereinzelung wird ausgehend von den Gefachen 4 in Flaschenkästen oder einer anderweitigen Zulaufordnung / Transportanordnung der Flaschen 3 zueinander auf dem Zuführtransporteur 2a mittels des wenigstens einen Umsetzroboters 7, 17 bis in die Flaschenkörbe 6 aufrechterhalten.

Ein störanfälliger Massentransport der Flaschen 3 mit Aufteilung des Flaschenstroms in den Flaschenkörben 6 zugeordnete Transportgassen im Aufgabebereich 5 der Flaschenwaschmaschine 1 wird somit vermieden. Entsprechend lässt sich der ansonsten dort für die Beseitigung von Transportblockaden oder dergleichen benötigte Personalaufwand erheblich reduzieren.

Zudem ermöglicht die programmierbare Steuereinheit 7a des wenigstens einen Umsetzroboters 7, 17 eine flexible Anpassung der Flaschenaufgabe an unterschiedliche Formate bereitgestellter Flaschenkästen, umzusetzender Flaschen 3 und/oder Betriebszustände der Flaschenwaschmaschine 1, beispielsweise an die sensorisch überwachte Funktionstüchtigkeit einzelner Flaschenkörbe 6.

## Patentansprüche

1. Verfahren zum Zuführen von Flaschen (3) in eine mehrspurige Flaschenwaschmaschine (1), wobei die Flaschen in Transportgefachen (4) und/oder auf einem Zuführtransporteur (2a) vereinzelt, insbesondere taktweise, bereitgestellt sowie robotergeführt mündungsseitig aus den Transportgefachen herausgezogen und/oder vom Zuführtransporteur (2a) aufgenommen und jeweils umgesetzt werden, wobei sich Flaschenkörbe dabei kontinuierlich entlang einer durch ein umlaufendes Transportmittel vorgegebenen Transportstrecke (10) bewegen,
**dadurch gekennzeichnet, dass** die Flaschen von einem Umsetzroboter (7) mit programmierbarer Steuerung in umlaufende Flaschenkörbe (6) zum Transport der Flaschen durch die Flaschenwaschmaschine direkt eingesetzt werden.

2. Verfahren nach Anspruch 1, wobei die Flaschenkörbe (6) beim Einsetzen der Flaschen (3) in horizontaler Transportrichtung oder entlang einer Steigung (10a) von höchstens 45° und/oder mit diesbezüglich orthogonal ausgerichteter Einführöffnung (6a) laufen.

3. Verfahren nach Anspruch 1 oder 2, wobei die Flaschen (3) kopfüber in die Flaschenkörbe (6) eingesetzt werden.

4. Verfahren nach einem der vorigen Ansprüche, wobei die Flaschen (3) von wenigstens einem ersten Roboterarm (8, 18) mündungsseitig gegriffen und aus den Transportgefachen (4) entnommen / vom Zuführtransporteur 2a aufgenommen werden, und wobei die Flaschen dann von wenigstens einem zweiten Roboterarm (9, 19) bodenseitig übernommen und in die Flaschenzellen (6) eingesetzt werden.

5. Verfahren nach Anspruch 4, wobei die Flaschen (3) direkt / zeitlich überlappend vom ersten Roboterarm (8, 18) an den zweiten Roboterarm (9, 19) übergeben werden.

6. Verfahren nach wenigstens einem der vorigen Ansprüche, wobei die Flaschen (3) einzeln in die Flaschenkörbe (6) eingesetzt werden.

7. Verfahren nach wenigstens einem der vorigen Ansprüche, wobei die Roboterarme (8, 18, 9, 19, 20) die Flaschen (3) nur unvollständig in die Flaschenkörbe (6) einführen und dann zum vollständigen Einsetzen in den Flaschenkörben fallen / rutschen lassen.

8. Flaschenwaschmaschine (1), umfassend: einen Aufnahmebereich (2) zum Bereitstellen von in Transportgefachen (4) und/oder auf einem Zuführtransporteur (2a) vereinzelten Flaschen (3); einen Aufgabebereich (5) zum Einsetzen der Flaschen in die Flaschenwaschmaschine durchlaufende Flaschenkörbe (6); und wenigstens einen Umsetzroboter (7) mit einem Roboterarm (8, 18, 20) zum mündungsseitigen Aufnehmen und Umsetzen der derart bereitgestellten Flaschen, wobei die Flaschenwaschmaschine ferner ausgebildet ist, die Flaschenkörbe im Aufgabebereich kontinuierlich entlang einer durch ein umlaufendes Transportmittel vorgegebenen Transportstrecke (10) zu bewegen,
**dadurch gekennzeichnet, dass** der/die Umsetzroboter eine programmierbare Steuerung umfasst/umfassen und zum direkten Einsetzen der Flaschen in die Flaschenkörbe insbesondere mittels eines weiteren, die Flaschen bodenseitig übernehmenden Roboterarms (9, 19) ausgebildet ist/sind.

9. Flaschenwaschmaschine nach Anspruch 8, ferner mit einer im Aufgabebereich (5) horizontal oder mit einer Steigung (10a) von höchstens 45° verlaufenden Transportstrecke (10) für die Flaschenkörbe.

10. Flaschenwaschmaschine nach Anspruch 8 oder 9, wobei die Transportstrecke (10) und die Flaschenkörbe (6) so ausgebildet sind, dass die Einführöffnungen (6a) der Flaschenkörbe im Aufgabebereich (5) vertikal nach oben oder mit einer diesbezüglichen Neigung (12) von höchstens 45° ausgerichtet sind.

11. Flaschenwaschmaschine nach einem der Ansprüche 8 bis 10, wobei der/die Umsetzroboter (7) derart gesteuert ist/sind, dass die Flaschen (3) beim Einsetzen in die Flaschenkörbe (6) kopfüber ausgerichtet sind.

12. Flaschenwaschmaschine nach wenigstens einem der Ansprüche 8 bis 11, wobei der/die Umsetzroboter (7) wenigstens einen ersten Roboterarm (8, 18) zum mündungsseitigen Greifen und Aufnehmen der Flaschen (3) in/aus den Transportgefachen (4) / vom Zuführtransporteur (2a) umfasst/umfassen sowie einen jeweils zugeordneten zweiten Roboterarm (9, 19) zum bodenseitigen Übernehmen und Einsetzen der Flaschen in die Flaschenzellen (6).

13. Flaschenwaschmaschine nach Anspruch 12, wobei der/die Umsetzroboter (7) zur direkten Übergabe der Flaschen (3) vom ersten an den zweiten Roboterarm (8, 18, 9, 19) durch zeitlich überlappendes Greifen derselben Flasche ausgebildet ist/sind.

14. Flaschenwaschmaschine nach wenigstens einem der Ansprüche 8 bis 13, wobei der/die Umsetzroboter (7) wenigstens einen Roboterarm (20) mit einem ersten Greifer (20a) zum mündungsseitigen Greifen und Aufnehmen der Flaschen (3) in/aus den Transportgefachen (4) / vom Zuführtransporteur (2a) umfasst/umfassen sowie einen zweiten Greifer (20b) zum bodenseitigen Übernehmen und Einsetzen der Flaschen in die Flaschenzellen (6).

15. Flaschenwaschmaschine nach einem der Ansprüche 8 bis 14, wobei die Roboterarme (8, 18, 9, 19, 20) jeweils wenigstens einen Greifer (8a, 9a, 18a, 19a, 20a, 20b) pro umzusetzende Flasche (3) umfassen, um die Flaschen gruppenweise oder einzeln in den Transportgefachen (4) / auf dem Zuführtransporteur (2a) aufzunehmen und/oder gruppenweise oder einzeln in die Flaschenkörbe (6) einzusetzen.

## Claims

1. Method for feeding bottles (3) into a multi-lane bottle washing machine (1), wherein the bottles are separated, in particular in a cyclical manner, in transport compartments (4) and/or on a feed conveyor (2a), and are robotically guided, pulled out of the transport compartments at the mouth end and/or picked up from the feed conveyor (2a) and transferred in each case, wherein bottle baskets move continuously along a transport path (10) defined by a circulating transport means, **characterized in that** the bottles are inserted directly into circulating bottle baskets (6) by a transfer robot (7) with programmable control for transporting the bottles through the bottle washing machine.

2. Method according to claim 1, wherein the bottle baskets (6) run in a horizontal transport direction or along an incline (10a) of at most 45° and/or with the insertion opening (6a) aligned orthogonally thereto when the bottles (3) are inserted.

3. Method according to claim 1 or 2, wherein the bottles (3) are inserted upside down into the bottle baskets (6).

4. Method according to one of the preceding claims, wherein the bottles (3) are gripped at the mouth end by at least one first robot arm (8, 18) and removed from the transport compartments (4) / picked up by the feed conveyor 2a, and wherein the bottles are then taken over by at least one second robot arm (9, 19) at the bottom and inserted into the bottle cells (6).

5. Method according to claim 4, wherein the bottles (3) are transferred directly/overlapping in time from the first robot arm (8, 18) to the second robot arm (9, 19).

6. Method according to at least one of the previous claims, wherein the bottles (3) are inserted individually into the bottle baskets (6).

7. Method according to at least one of the previous claims, wherein the robot arms (8, 18, 9, 19, 20) only partially insert the bottles (3) into the bottle baskets (6) and then allow them to fall/slide into the bottle baskets for complete insertion.

8. Bottle washing machine (1), comprising: a receiving area (2) for providing
bottles (3) separated in transport compartments (4) and/or on a feed conveyor (2a); a feeding area (5) for inserting the bottles into bottle baskets (6) passing through the bottle washing machine; and at least one transfer robot (7) with a robot arm (8, 18, 20) for picking up and transferring the bottles provided in this way at the mouth end, wherein the bottle washing machine is further designed
to move the bottle baskets in the feed area continuously along a transport path (10) defined by a circulating transport means,
**characterized in that** the transfer robot(s) comprises/comprise a programmable control and is/are designed for directly inserting the bottles into the bottle baskets, in particular by means of a further robot arm (9, 19) which picks up the bottles at the bottom.

9. Bottle washing machine according to claim 8, further comprising a transport path (10) for the bottle baskets, which runs horizontally in the feed area (5) or with an incline (10a) of at most 45°.

10. Bottle washing machine according to claim 8 or 9, wherein the transport path (10) and the bottle baskets (6) are designed such that the insertion openings (6a) of the bottle baskets in the feed area (5) are aligned vertically upwards or with a relative inclination (12) of at most 45°.

11. Bottle washing machine according to one of claims 8 to 10, wherein the transfer robot(s) (7) is/are controlled such that the bottles (3) are oriented upside down when they are placed in the bottle baskets (6).

12. Bottle washing machine according to at least one of claims 8 to 11, wherein the transfer robot(s) (7) comprises/comprise at least one first robot arm (8, 18) for gripping and picking up the bottles (3) in/from the transport compartments (4)/from the feed conveyor (2a) at the mouth end, and a respective second robot arm (9), 19) for transferring the bottles to the bottom and inserting them into the bottle cells (6).

13. Bottle washing machine according to claim 12, wherein the transfer robot(s) (7) is/are designed for direct transfer of the bottles (3) from the first to the second robot arm (8, 18, 9, 19) by temporally overlapping gripping of the same bottle.

14. Bottle washing machine according to at least one of claims 8 to 13, wherein the transfer robot(s) (7) comprises/comprise at least one robot arm (20) with a first gripper (20a) for
grasping and picking up the bottles (3) in/from the transport compartments (4)/from the feed conveyor (2a) and a second gripper (20b) for transferring and inserting the bottles into the bottle cells (6) from the bottom.

15. Bottle washing machine according to one of claims 8 to 14, wherein the robot arms (8, 18, 9, 19, 20) each comprise at least one gripper (8a, 9a, 18a, 19a, 20a, 20b) per bottle (3) to be transferred in order to pick up the bottles in groups or individually in the transport compartments (4) / on the feed conveyor (2a) and/or insert them in groups or individually into the bottle baskets (6).

## Revendications

1. Procédé d'alimentation de bouteilles (3) dans une machine à laver les bouteilles (1) à plusieurs voies, dans lequel les bouteilles sont fournies de manière individualisée, en particulier de manière cadencée, dans des compartiments de transport (4) et/ou sur un transporteur d'alimentation (2a), et sont retirées des compartiments de transport du côté de l'embouchure en étant guidées par un robot et/ou sont accueillies et respectivement transférées par le transporteur d'alimentation (2a), dans lequel des paniers à bouteilles se déplacent, grâce à un moyen de transport circulaire, de manière continue le long d'un trajet de transport (10) prédéfini, **caractérisé en ce que** les bouteilles sont insérées directement dans des paniers à bouteilles (6) en circulation par un robot de transfert (7) comprenant un dispositif de commande programmable afin de transporter les bouteilles à travers la machine à laver les bouteilles.

2. Procédé selon la revendication 1, dans lequel, lors de l'insertion des bouteilles (3), les paniers à bouteilles (6) se déplacent dans le sens de transport horizontal ou le long d'une pente (10a) d'au plus 45° et/ou avec l'orifice d'insertion (6a) orienté de manière orthogonale par rapport au dit sens ou à ladite pente.

3. Procédé selon la revendication 1 ou 2, dans lequel les bouteilles (3) sont insérées la tête la première dans les paniers à bouteilles (6).

4. Procédé selon l'une quelconque des revendications précédentes, dans lequel les bouteilles (3) sont saisies du côté de l'embouchure par au moins un premier bras de robot (8, 18) et sont retirées des compartiments de transport (4)/sont accueillies par le transporteur d'alimentation (2a), et dans lequel les bouteilles sont ensuite prises en charge du côté du fond par au moins un deuxième bras de robot (9, 19) et sont insérées dans les cellules à bouteilles (6).

5. Procédé selon la revendication 4, dans lequel les bouteilles (3) sont transférées directement/de manière temporellement superposée du premier bras de robot (8, 18) au deuxième bras de robot (9, 19).

6. Procédé selon au moins l'une quelconque des revendications précédentes, dans lequel les bouteilles (3) sont insérées individuellement dans les paniers à bouteilles (6).

7. Procédé selon au moins l'une quelconque des revendications précédentes, dans lequel les bras de robot (8, 18, 9, 19, 20) n'introduisent les bouteilles (3) que de manière incomplète dans les paniers à bouteilles (6), puis les font tomber/glisser dans les paniers à bouteilles en vue d'une insertion complète.

8. Machine à laver les bouteilles (1), comprenant : une région d'accueil (2) permettant de fournir des bouteilles (3) individualisées dans des compartiments de transport (4) et/ou sur un transporteur d'alimentation (2a) ; une région d'activité (5) permettant d'insérer les bouteilles dans des paniers à bouteilles (6) traversant la machine à laver les bouteilles ; et au moins un robot de transfert (7) comprenant un bras de robot (8, 18, 20) et permettant d'accueillir du côté de l'embouchure les bouteilles ainsi fournies et de les transférer, dans laquelle la machine à laver les bouteilles est en outre conçue pour déplacer de manière continue grâce à un moyen de transport circulaire les paniers à bouteilles dans la région d'activité le long d'un trajet de transport (10) prédéfini,
**caractérisée en ce que** le/les robot(s) de transfert comprend/comprennent un dispositif de commande programmable et est/sont conçu(s) pour une insertion directe des bouteilles dans les paniers à bouteilles, en particulier au moyen d'un autre bras de robot (9, 19) prenant en charge les bouteilles du côté du fond.

9. Machine à laver les bouteilles selon la revendication 8, comprenant en outre un trajet de transport (10) pour les paniers à bouteilles, qui s'étend dans la région d'activité (5) de manière horizontale ou avec une pente (10a) d'au plus 45°.

10. Machine à laver les bouteilles selon la revendication 8 ou 9, dans laquelle le trajet de transport (10) et les paniers à bouteilles (6) sont conçus de sorte que les orifices d'introduction (6a) des paniers à bouteilles dans la région d'activité (5) sont orientés verticalement vers le haut ou avec une inclinaison (12) par rapport à la verticale d'au plus 45°.

11. Machine à laver les bouteilles selon l'une quelconque des revendications 8 à 10, dans laquelle le/les robot(s) de transfert (7) est/sont commandé(s) de telle manière que les bouteilles (3) sont orientées la tête la première lors de l'insertion dans les paniers à bouteilles (6).

12. Machine à laver les bouteilles selon au moins l'une quelconque des revendications 8 à 11, dans laquelle le/les robot(s) de transfert (7) comprend/comprennent au moins un premier bras de robot (8, 18) permettant de saisir et accueillir les bouteilles (3) du côté de l'embouchure dans/à partir des compartiments de transport (4)/depuis le transporteur d'alimentation (2a) et un deuxième bras de robot (9, 19) respectivement associé et permettant de prendre en charge et insérer les bouteilles du côté du fond dans les cellules à bouteilles (6).

13. Machine à laver les bouteilles selon la revendication 12, dans laquelle le/les robot(s) de transfert (7) est/sont conçu(s) pour transférer directement les bouteilles (3) du premier au deuxième bras de robot (8, 18, 9, 19) en saisissant la même bouteille de manière temporellement superposée.

14. Machine à laver les bouteilles selon au moins l'une quelconque des revendications 8 à 13, dans laquelle le/les robot(s) de transfert (7) comprend/comprennent au moins un bras de robot (20) comprenant une première pince (20a) permettant de saisir et accueillir les bouteilles (3) du côté de l'embouchure dans/à partir des compartiments de transport (4)/depuis le transporteur d'alimentation (2a) et une deuxième pince (20b) permettant de prendre en charge et insérer les bouteilles du côté du fond dans les cellules à bouteilles (6).

15. Machine à laver les bouteilles selon l'une quelconque des revendications 8 à 14, dans laquelle les bras de robot (8, 18, 9, 19, 20) comprennent respectivement au moins une pince (8a, 9a, 18a, 19a, 20a, 20b) par bouteille (3) à déplacer afin d'accueillir les bouteilles par groupes ou individuellement dans les compartiments de transport (4)/sur le transporteur d'alimentation (2a) et/ou de les insérer par groupes ou individuellement dans les paniers à bouteilles (6).
